# DEMANDE DE BREVET EUROPEEN

(11) **EP 1 158 228 A1**
(43) Date de publication de la demande: **28.11.2001**
(21) Numéro de dépôt: 01440114.5
(22) Date de dépôt: 19.04.2001
(51) Int. Cl.: F16K 15/20, A41C 3/10

(54) **Valve pour le passage bidirectionnel d'un fluide**

(30) Priorité: 25.05.2000 FR 0006710
(71) Demandeur: PLAYTEX APPAREL, INC., Stamford Connecticut 06904 (US)
(72) Inventeur: Vandeweghe, Thomas, 38110 La Tour Du Pin (FR); Girard, Patrick, 38300 St Savin (FR)
(74) Mandataire: Littolff, Denis

(57) **Abrégé**

Valve pour le passage bidirectionnel d'un fluide, composée essentiellement d'un corps (1) dans lequel est pratiqué un conduit axial traversant prévu pour loger un organe obturateur (8), l'organe obturateur étant réalisé en un matériau flexible, caractérisée en ce que des moyens sont prévus sur au moins l'un de l'organe obturateur ou du corps de la valve pour permettre simultanément la fixation de l'un à l'autre et la circulation du fluide entre eux selon une direction d'allure axiale, ladite circulation étant bloquée en un endroit par contact entre respectivement une surface de l'organe obturateur (11) et une surface du conduit (5), l'orientation de ces surfaces permettant d'en obtenir le décollement, ouvrant le passage au fluide, par l'exercice d'actions axiales sur l'organe obturateur, lesdites surfaces revenant au contact l'une de l'autre à l'arrêt desdites actions.

## Description

La présente invention concerne le domaine des valves bidirectionnelles, qui permettent le passage d'un fluide également dans les deux sens. Elle a été conçue pour équiper plus particulièrement des soutiens-gorge du type connu sous la marque "wonderbra", dont les bonnets comprennent un coussinet permettant à l'utilisatrice d'augmenter l'effet pigeonnant du sous-vêtement, notamment pour mettre en valeur sa poitrine.

Dans la plupart des soutiens-gorge de ce type, lesdits coussinets, qui remplissent en fait un certain volume sous chaque sein, sont simplement constitués d'un élément d'un volume prédéterminé constant, constitué d'une enveloppe en matériau textile remplie d'une garniture conférant au coussinet son volume.

Le soutien-gorge ainsi équipé permet une surélévation prédéterminée des seins sans possibilité de la faire varier par modification du volume du coussinet. Au mieux, ces derniers sont amovibles, et le seul réglage possible consiste alors à mettre les coussinets ou à les enlever.

Il a également été proposé des coussinets gonflables, qui permettent par conséquent une certaine variation de l'effet pigeonnant par modification de la pression de gonflage. Le problème réside alors dans les moyens mis en oeuvre pour opérer le gonflage et le dégonflage, sans altérer d'une part les qualités esthétiques du soutien-gorge, ni soumettre d'autre part l'utilisatrice à des manoeuvres trop compliquées.

Les solutions proposées jusqu'à présent mettent en application dans certains cas des coussinets gonflables munis d'un orifice de gonflage et d'un orifice de dégonflage séparés, ce qui aboutit à compliquer sensiblement les opérations précitées, voire à recourir à deux outils distincts selon l'opération effectuée. Selon d'autres configurations, la valve est à l'extérieur des coussinets, par exemple au centre des bonnets, et il est par conséquent difficile de masquer la présence des moyens techniques de gonflage/dégonflage lorsque l'utilisatrice porte un décolleté très profond.

Enfin, lorsque la valve n'est pas totalement disposée à l'intérieur des coussinets, sa présence au moins partielle à l'extérieur et au voisinage de ceux-ci peut procurer un certain inconfort à l'utilisatrice dont la peau peut se trouver en contact avec des parties externes de la valve.

La présente invention a pour but de remédier à ces divers inconvénients, en proposant à titre principal une valve bidirectionnelle spécialement conçue pour équiper l'intérieur des coussinets, et comportant une seule extrémité d'accès accessible de l'extérieur. L'invention concerne également un ensemble composé d'une valve et d'une poire de gonflage, et enfin une vessie amovible dotée d'une telle valve, destinée à équiper des soutiens-gorge à effet pigeonnant.

La valve de l'invention, composée essentiellement d'un corps dans lequel est pratiqué un conduit axial traversant prévu pour loger un organe obturateur, l'organe obturateur étant réalisé en un matériau flexible, est caractérisée en ce que des moyens sont prévus sur au moins l'un de l'organe obturateur ou du corps de la valve pour permettre simultanément la fixation de l'un à l'autre et la circulation du fluide entre eux selon une direction d'allure axiale, ladite circulation étant bloquée en un endroit par contact entre respectivement une surface de l'organe obturateur et une surface du conduit, l'orientation de ces surfaces permettant d'en obtenir le décollement, ouvrant le passage au fluide, par l'exercice d'actions axiales sur l'organe obturateur, lesdites surfaces revenant au contact l'une de l'autre à l'arrêt desdites actions.

Les moyens précités permettent le passage du fluide de manière égale dans les deux sens. Dans un cas, au gonflage, il suffit d'appliquer des moyens de pompage à l'une des extrémités, et de les actionner en même temps que l'on exerce une action axiale, pour provoquer le remplissage de la vessie en air.

À l'inverse, la simple application de ladite action axiale permet le dégonflage de la vessie. Dans les deux cas, la durée d'exercice de l'action axiale permet le réglage du volume de la vessie, réglage qui conditionne la forme du soutien-gorge et par conséquent l'aspect pigeonnant de la poitrine.

Plus précisément, les surfaces de l'organe obturateur et du conduit réalisant le blocage de la circulation axiale du fluide sont des surfaces inclinées d'un angle voisin par rapport à l'axe longitudinal de la valve, délimitant pour chacun d'eux une portion de plus grande largeur et une portion plus étroite, et formant une butée axiale à l'insertion de l'un dans l'autre.

Ces surfaces représentent en fait des épaulements inclinés localisés à la fois dans le conduit récepteur et sur l'organe obturateur, qui réalisent simultanément une fonction de positionnement et la fonction essentielle de la valve, autorisant ou interdisant le passage du fluide. Elles sont quasi parallèles bien qu'une légère différence d'angle puisse favoriser l'ouverture du conduit.

Les moyens pour permettre la circulation axiale du fluide entre l'organe obturateur et le corps de la valve et leur fixation mutuelle consistent en des nervures axiales disposées sur au moins une partie de leur longueur, en dehors des surfaces de contact inclinées, un espace résiduel étant ménagé entre l'obturateur et ledit corps sur le reste de leur longueur.

Ces nervures réalisent donc deux fonctions distinctes : une première fonction de guidage et de positionnement à l'insertion, ainsi que de maintien d'un élément dans l'autre, du fait d'une liaison à friction. En second lieu, l'existence des nervures permet de maintenir libre des canaux parallèles auxdites nervures, assurant en seconde fonction le passage du fluide dans la direction générale du conduit.

De préférence, les nervures longitudinales équipent la portion de plus grande largeur située en amont des surfaces de contact inclinées. De préférence encore, le conduit et l'organe obturateur sont équipés de nervures longitudinales, la périodicité desdites nervures étant différente sur l'un et l'autre pour permettre l'existence de canaux de circulation du fluide.

Selon une configuration possible, le conduit peut être équipé de trois fois plus de nervures longitudinales que l'organe obturateur, lesdites nervures ayant alors toutes une section identique.

Selon l'invention, la portion de plus grande largeur de l'obturateur comporte de plus une ouverture canalaire axiale et centrale se prolongeant jusqu'à proximité des surfaces inclinées de contact. Il s'agit de la portion équipée de nervures, localisée en amont des surfaces de contact si l'on prend comme référence le sens d'insertion de l'organe obturateur dans le conduit axial.

Ce canal axial améliore la flexibilité de l'obturateur et facilite en particulier le décollement des surfaces, car les parois externes de ce dernier peuvent alors subir une flexion lorsqu'on exerce les forces axiales, ce qui modifie l'angle d'inclinaison des surfaces dudit obturateur par rapport aux surfaces du conduit. Le quasi-parallélisme initial n'étant plus assuré, les conditions d'une ouverture au passage du fluide sont remplies.

Selon une possibilité additionnelle, l'extrémité du corps de la valve comportant le conduit de plus grande largeur comporte un bouchon fixé au corps, ledit bouchon exerçant une compression sur l'organe obturateur maintenant collées leurs surfaces en contact.

De préférence, le bouchon est soudé au corps par ultrasons.

Les composants de la valve de l'invention précédemment décrits présentent une allure cylindrique, voire une symétrie de révolution comme le montre la description détaillée qui suit. De plus, selon une possibilité, le corps et le bouchon sont fabriqués en ABS, matériau qui présente les caractéristiques mécaniques requises et adaptées au fonctionnement de la valve.

L'organe obturateur, qui doit être flexible, est quant à lui fabriqué en un matériau élastomère.

Comme cela a été mentionné auparavant, l'invention concerne également un ensemble composé d'une valve et d'une poire de gonflage dotée d'un embout rigide s'adaptant dans le conduit le plus étroit, et de longueur suffisante pour repousser l'organe obturateur de telle sorte que les surfaces en contact se décollent.

De préférence, ladite poire comporte un unique orifice localisé dans la paroi qui subit une pression lors d'une opération de gonflage, l'emplacement dudit orifice dans ladite paroi étant tel que ce dernier est obturé lorsque la pression de gonflage est exercée.

Enfin, l'invention conceme une vessie gonflable munie d'une valve selon l'invention, destinée à équiper de manière amovible l'intérieur de chaque bonnet d'un soutien gorge et qui épouse à cet effet le volume inférieur desdits bonnets, ladite vessie étant réalisée par la soudure périphérique de deux feuilles plastiques souples dont l'une est thermo-formée pour conférer une épaisseur à la vessie, l'une des extrémités de la valve étant accessible de l'extérieur de chaque bonnet en vue du gonflage/dégonflage de la vessie. L'invention concerne enfin les soutiens-gorge qui sont équipés de telles vessies.

Les soutiens-gorge équipés de ces coussinets gonflables amovibles sont particulièrement avantageux, car les vessies peuvent être remplies ou vidées d'air à l'aide d'un unique orifice discret, l'intégration de la totalité de la valve de l'invention dans le volume des vessies procurant au surplus un confort appréciable aux utilisatrices.

L'invention va à présent être décrite plus en détail, en référence aux figures annexées, pour lesquelles :
- la figure 1 représente une coupe longitudinale d'un corps de valve selon la présente invention ;
- la figure 2 en montre une vue de dessous ;
- la figure 3 illustre une configuration de l'organe obturateur, en coupe longitudinale ;
- la figure 4 représente ce même obturateur en vue de dessous :
- la figure 5 montre une coupe médiane d'un bouchon destiné à fermer l'une des extrémités de la valve de l'invention ;
- la figure 6 illustre un embout destiné à coopérer avec l'autre extrémité d'une valve, en coupe longitudinale ;
- la figure 7 représente l'assemblage des éléments faisant l'objet des figures précédentes, selon une coupe également longitudinale ;
- la figure 8 est une vue en coupe de la poire de gonflage ; et,
- la figure 9 est une vue de dessus de ladite poire dotée de l'embout.

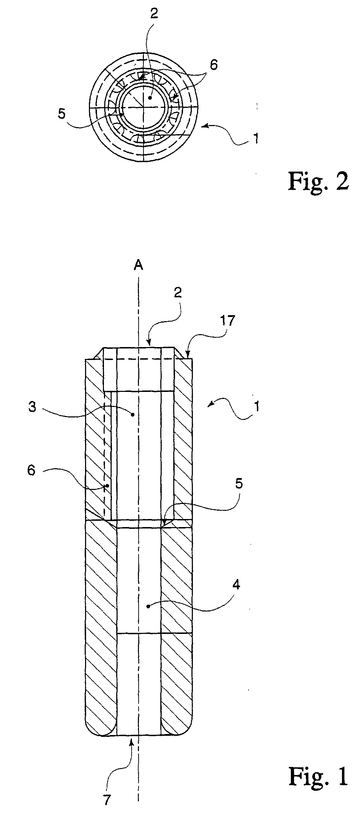

En référence à la figure 1, le corps de la valve (1) d'allure générale cylindrique comporte un conduit central (2) constitué de deux portions distinctes (3,4) séparées par une surface de raccordement (5) inclinée formant un angle aigu avec la perpendiculaire à l'axe (A) dudit corps (1). Cette surface (5) constitue en fait un épaulement chanfreiné.

La portion du conduit (2) de grande largeur (3) comporte des nervures axiales (6) dont seulement celle qui est coupée est représentée pour ne pas alourdir la figure. Ces nervures (6) apparaissent toutes dans la figure 2 et sont en l'occurrence au nombre de 9 réparties régulièrement sur la périphérie de cette portion (3) du conduit (2).

La portion étroite (4) comporte elle-même une embouchure (7) légèrement tronconique, pour l'insertion de l'embout (voir ci-après).

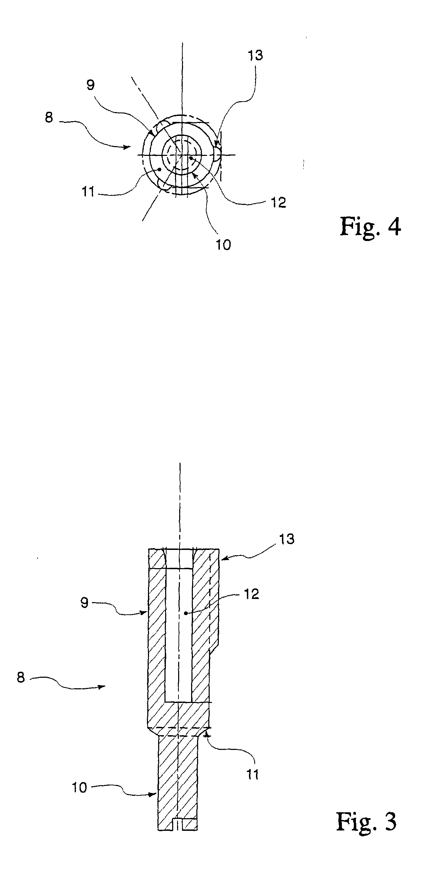

L'obturateur (8) montré en figures 3 et 4 comporte également deux portions d'inégale largeur (9,10) séparées par un épaulement présentant une surface (11) inclinée d'un angle aigu par rapport à la perpendiculaire à son axe central. Cet angle bien que proche de l'angle d'inclinaison de la surface (5) n'en est pas identique. Dans la configuration montrée, l'angle de la surface (5) est de 30°, alors que celui de la surface (11) est de 35°.

La portion (9) de plus grande largeur comporte un canal central (12) qui améliore la réaction de cette portion (9) en réponse aux efforts axiaux exercés dans cette zone. L'embouchure de ce canal est légèrement évasée pour faciliter l'insertion et le centrage du bouchon (voir ci-après).

Dans la configuration représentée, l'obturateur (8) comporte trois nervures (13) périphériques disposées à 120° l'une de l'autre, et de même dimensionnement que les nervures (6) du corps de la valve (1). Ces dernières sont espacées de 40° et d'une part leur fréquence trois fois supérieure et d'autre part leur dimensionnement identique permettent une insertion des nervures (13) de l'obturateur (8).

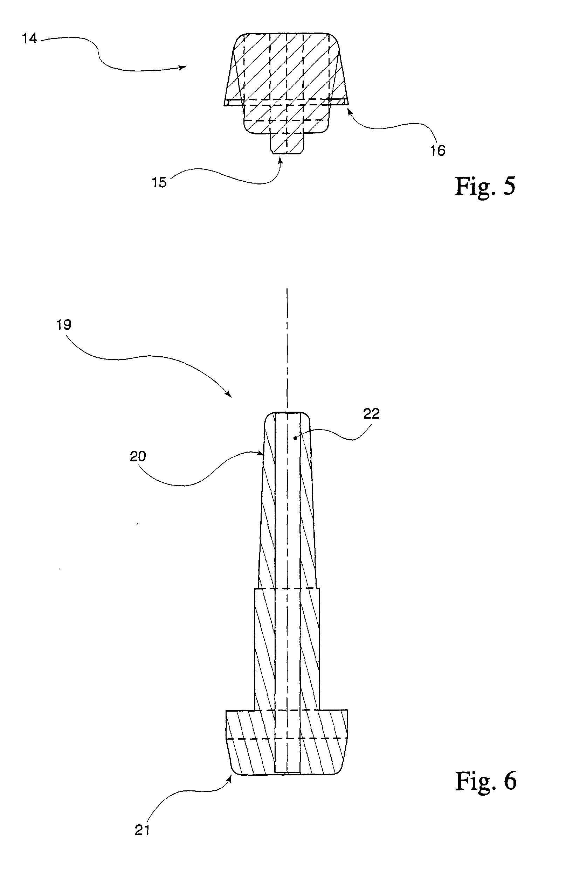

En référence à la figure 5, le bouchon (14) comporte un téton (15) de centrage dans l'embouchure du canal (12) de l'obturateur (8), ainsi qu'une gouttière périphérique (16) prévue pour être soudée au niveau de l'arête (17) délimitant la périphérie du conduit (2) du corps (1) de la valve.

L'embout (19) de la figure 6 présente un corps allongé (20) à l'une des extrémités duquel est disposée une tête (21) prévue pour être fixée à des moyens de gonflage (voir ci-après). Cet embout (19) est traversé par un conduit (22) véhiculant le fluide (l'air) vers ou en provenance de la valve.

L'extrémité de l'embout (19) située à l'opposé de la tête (21) est d'allure tronconique, d'angle prévu pour faciliter son insertion dans l'embouchure (7) de la portion étroite (4) du corps (1) de la valve.

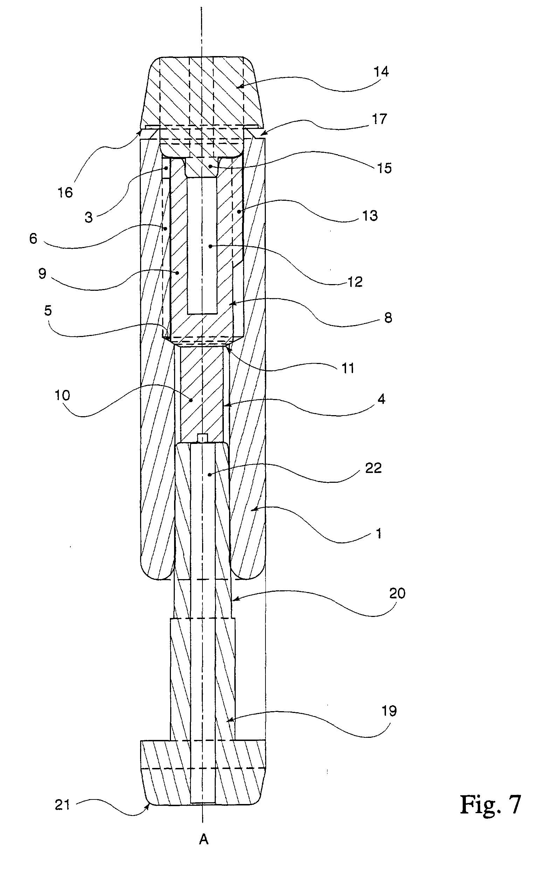

L'un des intérêts de la figure 7 est de montrer que la circulation du fluide se fait, au niveau de l'organe obturateur (8), en périphérie de ce dernier, dans un espace laissé libre entre la surface périphérique externe de cet organe (8) et la surface interne du conduit (2), bien entendu uniquement lorsque les surfaces (5, 11) sont décollées. Ce décollement est obtenu par l'action de l'extrémité de l'embout (19) contre l'extrémité de la portion (10) de plus petite largeur, qui comprime l'organe obturateur (8). Cette compression est facilitée par l'existence du canal (12) qui améliore la flexibilité de l'organe élastomère.

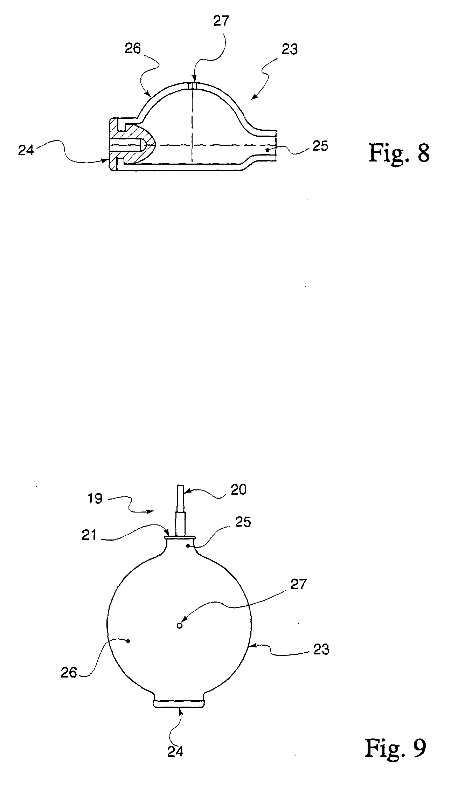

Cet embout (19) est en fait fixé à une poire de gonflage (23) qui apparaît en figures 8 et 9. Cette poire (23) réalisée en un matériau souple et élastique, présente un bouchon (24) obturant l'une de ses extrémités. L'autre extrémité (25) loge l'embout (19) dont la tête (21) est collée dans le conduit de sortie.

La paroi supérieure hémisphérique (26) de la poire (23) sur laquelle s'exerce la pression de gonflage est munie d'un orifice (27) traversant qui est obturé par le doigt de l'opérateur au moment de chaque opération de gonflage. Lors du dégonflage ledit orifice (27) est laissé libre, et l'air s'échappe notamment par là après compression de l'organe obturateur (8) décollant la surface (11) de la surface (5) (voir figure 7).

Il est à noter que la structure du corps (1) et de l'obturateur (8) a été conçue pour permettre un déplacement relatif sensiblement localisé à la zone de contact, sans que la liaison mécanique entre l'obturateur (8) et le corps (1) n'en soit modifiée. Cette liaison, qui doit préserver la position axiale relative de ces deux éléments pour permettre de revenir à une position d'obturation, est réalisée avec des nervures (13) rapportées à l'organe obturateur (8) qui sont plus courtes que les nervures (6) du corps (1) de la valve, lesquelles se prolongent jusqu'à la surface inclinée (5).

La description qui précède ne concerne qu'un exemple particulier de conception de l'invention, qui n'est nullement exhaustif de celle-ci. Au contraire, l'invention englobe les variantes de forme, de conception, de choix des matériaux etc... qui sont à la portée de l'homme de l'art.

## Revendications

1. Valve pour le passage bidirectionnel d'un fluide, composée essentiellement d'un corps dans lequel est pratiqué un conduit axial traversant prévu pour loger un organe obturateur, l'organe obturateur étant réalisé en un matériau flexible, **caractérisée en ce que** des moyens sont prévus sur au moins l'un de l'organe obturateur ou du corps de la valve pour permettre simultanément la fixation de l'un à l'autre et la circulation du fluide entre eux selon une direction d'allure axiale, ladite circulation étant bloquée en un endroit par contact entre respectivement une surface de l'organe obturateur et une surface du conduit, l'orientation de ces surfaces permettant d'en obtenir le décollement, ouvrant le passage au fluide, par l'exercice d'actions axiales sur l'organe obturateur, lesdites surfaces revenant au contact l'une de l'autre à l'arrêt desdites actions.

2. Valve pour le passage bidirectionnel d'un fluide selon la revendication précédente, **caractérisée en ce que** les surfaces de l'organe obturateur et du conduit réalisant le blocage de la circulation axiale du fluide sont des surfaces inclinées d'un angle voisin par rapport à l'axe longitudinal de la valve, délimitant sur l'organe obturateur et sur le conduit une portion de plus grande largeur et une portion plus étroite, et formant une butée axiale à l'insertion l'un dans l'autre.

3. Valve pour le passage bidirectionnel d'un fluide selon la revendication précédente, **caractérisée en ce que** les moyens pour permettre la circulation axiale du fluide entre l'organe obturateur et le corps de la valve et leur fixation mutuelle consistent en des nervures axiales disposées sur au moins une partie de leur longueur, en dehors des surfaces de contact inclinées, un espace résiduel étant ménagé entre eux sur le reste de leur longueur.

4. Valve pour le passage bidirectionnel d'un fluide selon la revendication précédente, **caractérisée en ce que** les nervures longitudinales équipent la portion de plus grande largeur située en amont des surfaces de contact inclinées.

5. Valve pour le passage bidirectionnel d'un fluide selon la revendication précédente, **caractérisée en ce que** le conduit et l'organe obturateur sont équipés de nervures longitudinales, la périodicité desdites nervures étant différente sur l'un et l'autre pour permettre l'existence de canaux de circulation du fluide.

6. Valve pour le passage bidirectionnel d'un fluide selon la revendication précédente, **caractérisée en ce que** le conduit est équipé de trois fois plus de nervures longitudinales que l'organe obturateur, lesdites nervures ayant toutes une section identique.

7. Valve pour le passage bidirectionnel d'un fluide selon l'une quelconque des revendications 4 à 6, **caractérisée en ce que** la portion de plus grande largeur de l'obturateur comporte une ouverture canalaire axiale et centrale se prolongeant jusqu'à proximité des surfaces inclinées de contact.

8. Valve pour le passage bidirectionnel d'un fluide selon l'une quelconque des revendications 2 à 7, **caractérisée en ce que** l'extrémité du corps de la valve comportant le conduit de plus grande largeur, comporte un bouchon fixé au corps, ledit bouchon exerçant une compression sur l'organe obturateur maintenant collées leurs surfaces en contact.

9. Valve pour le passage bidirectionnel d'un fluide selon la revendication précédente, **caractérisée en ce que** le bouchon est soudé au corps par ultrasons.

10. Valve pour le passage bidirectionnel d'un fluide selon l'une quelconque des revendications précédentes, **caractérisée en ce que** les composants qui la constituent présentent une allure cylindrique.

11. Valve pour le passage bidirectionnel d'un fluide selon l'une quelconque des revendications 8 à 10, **caractérisée en ce que** le corps et le bouchon sont fabriqués en ABS.

12. Valve pour le passage bidirectionnel d'un fluide selon l'une quelconque des revendications précédentes, **caractérisée en ce que** l'organe obturateur est fabriqué en un matériau élastomère.

13. Ensemble composé d'une valve selon les revendications 2 à 12 et d'une poire de gonflage dotée d'un embout rigide s'adaptant dans le conduit le plus étroit, et de longueur suffisante pour repousser l'organe obturateur de telle sorte que les surfaces en contact se décollent.

14. Ensemble selon la revendication précédente, **caractérisé en ce que** la poire comporte un unique orifice localisé dans la paroi qui subit une pression lors d'une opération de gonflage, l'emplacement dudit orifice dans ladite paroi étant tel que ce dernier est obturé lorsque la pression de gonflage est exercée.

15. Vessie gonflable munie d'une valve selon les revendications précédentes, destinée à équiper de manière amovible l'intérieur de chaque bonnet d'un soutien gorge et épousant à cet effet le volume inférieur desdits bonnets, ladite vessie étant réalisée par la soudure périphérique de deux feuilles plastiques souples dont l'une est thermo-formée pour conférer une épaisseur à la vessie, l'une des extrémités de la valve étant accessible de l'extérieur de chaque bonnet en vue du gonflage/dégonflage de la vessie.

16. Soutien-gorge à bonnets munis d'une vessie amovible selon la revendication précédente.
